# EUROPÄISCHE PATENTSCHRIFT

(11) **EP 0 974 265 B1**
(45) Veröffentlichungstag und Bekanntmachung des Hinweises auf die Patenterteilung: **11.04.2001**
(21) Anmeldenummer: 99114378.5
(22) Anmeldetag: 22.07.1999
(51) Int. Cl.: A01K 31/14, A01M 29/00

(54) **Anordnung zur artengerechten Plazierung von Schwalbennestern an Gebäudewänden**
Assembly for appropriately locating swallow nests on building walls
Ensemble pour la localisation appropriée des nids d'hirondelle sur les murs d'un bâtiment

(30) Priorität: 23.07.1998 DE 19833198
(43) Veröffentlichungstag der Anmeldung: 26.01.2000
(73) Patentinhaber: Sembitzky, Ute, 17489 Greifswald (DE)
(72) Erfinder: Sembritzky, Jörg, 17489 Greifswald (DE); Sembritzky, Ute, Geb. Panknin, 17489 Greifswald (DE)
(74) Vertreter: Meyerhöfer, Dietmar, Dipl.-Ing.

(56) Entgegenhaltungen:
- US-A- 5 092 088
- "Prospect "Vogelschutz - Naturschutz"" 1991 , FIRMA SCHWEGLER, VOGEL- & NATURSCHUTZPRODUKTE GMBH , SCHORNDORF (DE) XP002116774 * Seite 23 *

## Beschreibung

Die Erfindung betrifft eine Anordnung zur artengerechten Plazierung von Schwalbennestern an Gebäudeaußenwände und wird im Bauwesen eingesetzt.

Zunehmend geringere Brutangebote in Ställen und Scheunen zwingen die Schwalben, insbesondere die Mehlschwalbe, Delichon urbica, ihre Brutstätten an Außenwänden von Gebäuden im Schutze eines vorspringenden Daches, meist an der Dachunterkante, aber auch im Giebel, in Balkon- und Fensternischen, unter Türstürzen, Balkonen oder anderen Mauervorsprüngen zu errichten. Die Schwalbe bevorzugt dabei helle Wandfarben. Ihre Art des Nestbaus führt zur unerwünschten Verschmutzung von Fassadenanstrichen während der Brutzeit. Diese verleitet die Bauherren, Hauseigentümer und andere bisher, gesetzwidrige Mittel gegen den Nestbau anzuwenden.

Bekannt ist das Anbringen von Flatterbändern an Hauswänden, die jedoch weder ästhetisch und dauerhaft sind, noch der artengerechten Pflege der Vögel entsprechen.

Der Prospekt "Vogelschutz-Naturschutz" der Firma Schwegler zeigt ein Schmutzschutzbrett zur Anordnung unterhalb der Schwalbennester an der Gebäudeaußenwand.

Weiterhin ist das brutale mechanische Abstreifen der Nester von der Hausfassade während der Nestbau- und Brutphase bekannt geworden.

Somit wird der wichtigste insektivore Luftraumjäger vielen Orts am Brüten gehindert und sein Lebensraum weiter eingeschränkt.

Die Aufgabe der Erfindung ist eine dauerhafte, effektive und ästhetische Anordnung zur gezielten Förderung des geordneten Nestbaus der Schwalben an Gebäudewänden.

Erfindungsgemäß besteht die Anordnung aus der Kombination von einem Schmutzschutzbrett, das in bekannter Weise mit seiner Breitseite waagerecht an der Hausaußenwand und unterhalb des Dachsturzes im Abstand von mindestens einer Nesthöhe angebracht ist, und einem oder zwei nichtrostenden Drahtseilen, die mittels geeigneter Stützen unterhalb des Schmutzschutzbrettes parallel zur Gebäudeaußenwand im Abstand des Maßes der Bruthöhe gespannt sind.

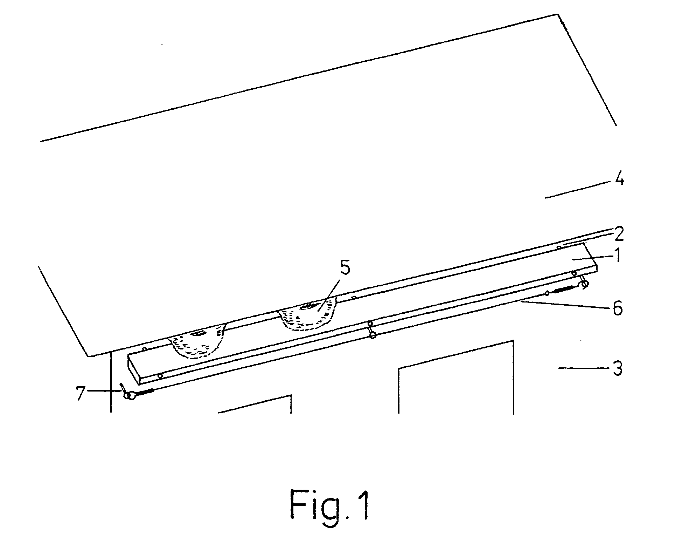

Nachfolgend ist die Erfindung durch ein Ausführungsbeispiel näher erläutert werden. Dabei stellt die dazugehörige Zeichnung in Fig. 1 die erfindungsgemäße Anordnung dar.

Gemäß Fig. 1 ist das Schmutzschutzbrett 1 mittels geeigneter Flansche 2 längs der Hausfassade 3 unter dem Dachsturz 4 so angebracht, daß die Schwalben entsprechend ihrer natürlichen Lebensart über dem Schmutzschutzbrett 1 ihre Nester 5, welche durch den Dachsturz 4 geschützt sind, an der Hausfassade 3 bauen können.

Unterhalb des Schmutzschutzbrettes 1 ist das korrosionsfreie Drahtseil 6, vorzugsweise aus einem oder mehreren nichtrostenden Stahldrähten gefertigt, über mindestens zwei Stützhaltern 7 mittels Spannschlosses gespannt. Der Abstand des Drahtseiles 6 zum Schmutzschutzbrett 1 und zur Hausfassade 3 entspricht etwa der natürlichen Bruthöhe der Schwalben im Nest.

Bei einer relativ hohen Anzahl von Schwalbenpaaren ist es vorteilhaft, zur Unterstützung der Schutzwirkung gegen den Nestbau unterhalb des Schmutzschutzbrettes 1 ein zweites Drahtseil in einem etwas größeren Abstand als das erste Drahtseil 6 parallel zu diesem zu spannen.

Durch diese erfindungsgemäße Anordnung wird erreicht, daß der Nestbau der Schwalben gezielt oberhalb des Schmutzschutzbrettes 1 hingelenkt wird und somit keine Veranlassung mehr gegeben ist, dem Nestbau wegen drohender Verschmutzungsgefahr durch rechtswidrige Handlungen entgegen zu wirken.

## Patentansprüche

1. Anordnung zur artengerechten Plazierung von Schwalbennestern (5) an Gebäudewänden, dadurch gekennzeichnet, daß sie aus einer Kombination von einem Schmutzschutzbrett (1), das in bekannter Weise mit seiner Breitseite waagerecht an der Hausaußenwand (3) und unterhalb des Dachsturzes (4) im Abstand von mindestens einer Nesthöhe angebracht ist, und einem oder zwei nichtrostenden Drahtseilen (6), die mittels geeigneter Stützen (7) unterhalb des Schmutzschutzbrettes (1) parallel zu diesem und zur Gebäudeaußenwand (3) im Abstand des Maßes der Bruthöhe gespannt sind, besteht.

## Claims

1. Assembly for appropriately locating swallow nests (5) on building walls, characterized in that it comprises a combination of an anti-soiling board (1) mounted in a known way with its broad side horizontal against the outside wall (3) of the house and below the eaves (4) with a clearance of at least the height of one nest, and one or two rustproof wire lines (6) which are tensioned by means of suitable brackets (7) below the anti-soiling board (1) parallel to the latter and to the outside wall (3) of the building with a clearance of the size of the brooding height.

## Revendications

1. Ensemble pour la localisation appropriée de nids d' hirondelle (5) sur les murs d' un bâtiment, caractérisé en ce qu' il se compose d' une combinaison d' une plache de protection contre les salissures (1), qui est montée de manière connue avec sa partie large horizontale contre le mur extérieur (3) du bâtiment et en dessous du linteau de toit (4) à une distance d' au moins une hauteur de nid, et d' un ou de deux fils métalliques inoxydables (6), qui sont tendus au moyen de supports appropriés (7) en dessous de la planche de protection conte les salissures (1) parallèlement à celle-ci et au mur extérieur (3) du bâtiment, à une distance correspondant à la hauteur de la couvée.
